Europäisches Patentamt

European Patent Office

Office européen des brevets

(11) Numéro de publication: **0 269 534 B1**

# FASCICULE DE BREVET EUROPEEN

(45) Date de publication de fascicule du brevet: **24.06.92**  (51) Int. Cl.⁵: **C25C 3/12**

(21) Numéro de dépôt: **87420308.6**

(22) Date de dépôt: **12.11.87**

(54) **Revêtement de protection des rondins d'anodes précuites et de la partie émergeante de ces anodes.**

(30) Priorité: **14.11.86 FR 8616285**

(43) Date de publication de la demande:
**01.06.88 Bulletin 88/22**

(45) Mention de la délivrance du brevet:
**24.06.92 Bulletin 92/26**

(84) Etats contractants désignés:
**CH DE ES FR GB IT LI NL**

(56) Documents cités:
**EP-A- 0 092 704**
**EP-A- 0 197 887**
**DE-B- 1 182 576**
**GB-A- 1 534 784**

(73) Titulaire: **S.E.R.S. SOCIETE DES ELECTRODES
& REFRACTAIRES SAVOIE
Tour Manhattan - La Défense 2 6, place de
l'Iris
F-92400 Courbevoie(FR)**

(72) Inventeur: **Audras, Gabriel
12, rue du Plat
F-69002 Lyon(FR)**
Inventeur: **Samanos, Bernard
30, rue Claude Jusseaud
F-69110 Ste Foy Les Lyon(FR)**

(74) Mandataire: **Pascaud, Claude et al
PECHINEY 28, rue de Bonnel
F-69433 Lyon Cédex 3(FR)**

Rank Xerox (UK) Business Services

## Description

## DOMAINE TECHNIOUE DE L'INVENTION

L'invention concerne un revêtement de protection contre la corrosion et l'oxydation à chaud destiné aux rondins d'anodes précuites et à la partie carbonée émergeante de ces anodes utilisées dans les cuves de production d'aluminium par électrolyse d'alumine dissoute dans de la cryolithe fondue selon le procédé Hall-Héroult.

## ETAT DE LA TECHNIOUE

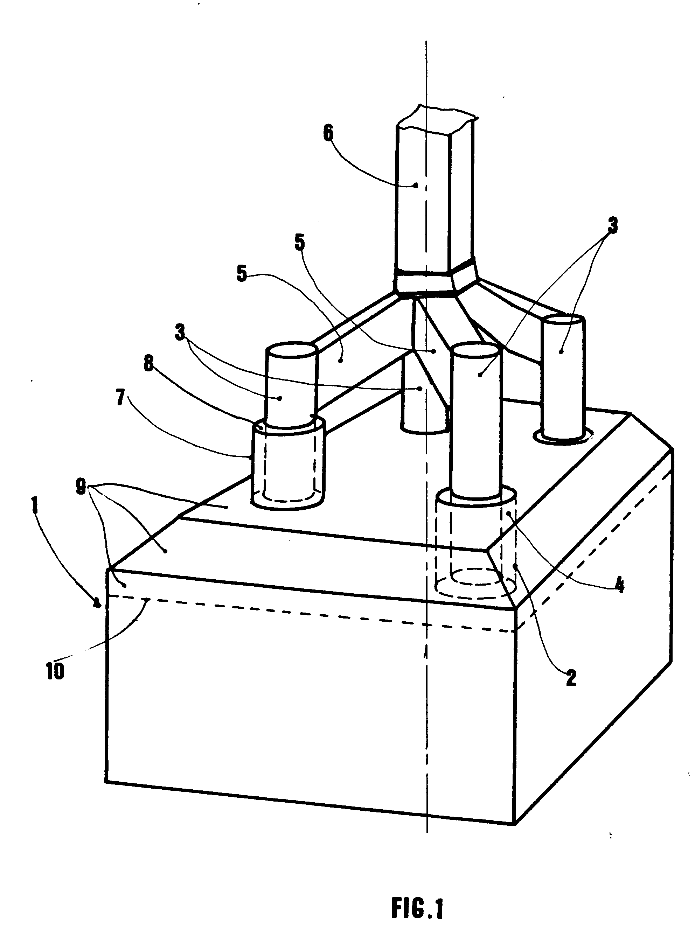

La plupart des cuves modernes pour la production électrolytique selon le procédé Hall-Héroult utilisent des anodes carbonées dites "précuites" obtenues par mise en forme à 120-160°C environ d'une pâte carbonée essentiellement constituée de coke (et/ou anthracite) et de brai, puis cuisson pendant une centraine d'heures à 1150/1200°C. La figure 1 rappelle la structure générale d'une anode dite "précuite" de type classique à 4 rondins.

Lors de la mise en forme de la pâte, on ménage, à la partie supérieure de l'anode 1 un certain nombre de cavités 2 souvent appelées "bouchons d'anode" dans lesquelles on introduira et scellera des rondins 3 (ou des plaques d'aciers) qui serviront à la fois à suspendre l'anode au cadre anodique et à l'alimenter en courant. Le scellement est effectué par coulée de fonte 4 ou plus rarement au moyen d'une pâte carbonée de composition spéciale.

Les rondins d'acier 3 sont soumis à la fois à une température élevée et à l'effet corrosif des effluents fluorés émis par la cuve en fonctionnement. En outre, lors de certaines opérations, par exemple lors d'une descente d'anodes destinée à faire cesser un "effet anodique", ou lors de "vagues" dans l'électrolyte, du bain cryolithique fondu peut entrer en contact avec la base des rondins d'acier.

Ces diverses causes font que la teneur en fer de l'aluminium produit dans la cuve est sensiblement augmentée par la corrosion de base des rondins. Cette corrosion a aussi pour effet nocif de réduire la durée de vie de l'ensemble de suspension des anodes (rondins + barres de liaison 5 entre les rondins 3 et la tige d'anode 6) qui sont normalement récupérés et réutilisés après extraction de la cuve des anodes usées.

De même, la partie émergeante des anodes, c'est-à-dire la partie supérieure à 9 qui, en fonctionnement normal de la cuve d'électrolyse, n'est pas immergée dans l'électrolyte fondu, subit une dégradation par combustion, que l'on cherche à éviter par un recouvrement de bain d'électrolyse solidifié et broyé, éventuellement mélangé d'alumine, ou encore par une métallisation obtenue par projection au pistolet d'aluminium liquide.

On a également cherché à protéger la base des rondins 3 par différents procédés tels que la métallisation par projection d'aluminium liquide ou la mise en place, autour des rondins, d'une collerette 7 en aluminium laissant avec le rondin 3 (ou la plaque) un espace 8 de 10 à 30 mm que l'on remplit d'une pâte carbonée coulée à chaud. On a proposé pour cela des pâtes carbonées classiques (coke et/ou anthracite et/ou graphite + brai) ou des compositions plus complexes comportant des produits organiques polymérisables et cokéfiables tels que résines époxy, résines furfuryliques, etc... (DE AS 2 547 061).

Selon EP 0092704, une protection efficace contre la corrosion des rondins à chaud est obtenue au moyen d'éléments annulaires ou bagues d'étanchéité amovibles en matériau composite contenant des produits carbonés à base de graphite en mélange avec au moins un matériau céramique généralement en oxyde réfractaire. Ces constituants sont imprégnés et liés entre eux par un liant cokéfiable usuel tels que brai, goudron, résine phénolique.

Toutefois, ces compositions hydrocarbonées ont pour inconvénient majeur de provoquer, dès la mise en service de l'anode qui atteint progressivement sa température d'équilibre, un dégagement de vapeurs d'hydrocarbures provenant du craquage de la pâte carbonée. Certains composés aromatiques ainsi formés sont soupçonnés d'effets physiologiques néfastes, et, en outre, ils polluent et favorisent l'obstruction des circuits d'aspiration et de lavage d'effluents sur les cuves d'électrolyse. Pour toutes ces raisons, les "pâtes de collerettes" composées uniquement de produits carbonés ne satisfont plus les exploitants de cuves d'électrolyse à anodes précuites. Or, la tendance actuelle est, précisément, de produire dans les cuves un aluminium primaire de pureté aussi élevée que possible. La corrosion de la base des rondins étant une des sources de fer dans l'aluminium produit, il importe donc de trouver un moyen de protection efficace et qui, de préférence, s'applique également à la partie carbonée émergeante 9 des anodes.

Dans ces conditions, la recherche de matériaux sans liant carboné peut a priori inciter à choisir des bétons réfractaires à haute teneur en alumine liée par un ciment hydraulique du type aluminate de chaux

2

(GB 1534784). De tels matériaux s'avèrent particulièrement adaptés pour réaliser par moulage des pièces d'usure destinées à être mises brutalement en contact avec un jet de métal en fusion, donc à résister au choc thermique et à l'abrasion. Ces matériaux alumineux ne sont en revanche pas connus comme matériaux de recouvrement et un risque supplémentaire de détérioration est à craindre dans le cas présent avec une dissolution progressive de l'alumine et plus spécialement de l'alumine activée par le bain cryolithique fondu.

## OBJET DE L'INVENTION

L'objet de l'invention est donc une composition pour pâte de revêtement de protection contre la corrosion et l'oxydation à chaud destinée aux rondins d'anodes précuites et à la partie carbonée, émergeante de ces anodes pour les cuves d'électrolyse Hall-Héroult, constituée d'un agrégat de produits pulvérulents, d'un liant d'aluminate de calcium et éventuellement d'eau caractérisé en ce que :
- l'agrégat est formé de produits carbonés choisis parmi le coke, le graphite, le semi-graphite, les déchets d'électrodes éventuellement additionnés de poudre d'alumine dans une proportion pouvant constituer jusqu'à 50% du poids de cet agrégat;
- le liant est présent dans une proportion comprise entre 15 et 50% du poids de l'agrégat et est un ciment d'aluminate de chaux ayant une teneur en alumine au moins égale à 70% et une teneur totale en impuretés gênantes telles que, par exemple $SiO_2$, $Fe_2O_3$, $TiO_2$, $K_2O$, $Cr_2O_3$, $Mn_2O_3$, inférieure à 5%;
- la quantité d'eau ajoutée à la matière sèche constituée par le mélange agrégat + liant pour former la pâte est au plus égale à 60% du poids de matière sèche.

Les impuretés qualifiées de gênantes sont celles qui, une fois introduites dans le bain d'électrolyse, sont réduites et dont les métaux correspondants Si, Fe, Ti, Cr, Mn, K s'allient à l'aluminium liquide.

Il est préférable d'effectuer une addition complémentaire d'un anti-oxydant tel qu'une poudre métallique, à raison de 0,01 à 5% en poids, par exemple de l'aluminium passivé en grains < 0,1 mm qui améliore sensiblement la résistance à l'oxydation.

On peut également effectuer dans la pâte une addition d'alumine, par exemple de l'alumine pour électrolyse ou de l'alumine globulaire, à une teneur pouvant constituer jusqu'à 50% du poids total de l'agrégat.

La teneur pondérale en ciment, exprimée en pour cent en poids de l'agrégat (produit carboné + alumine + additifs) est comprise entre 15 et 50%. On conviendra de désigner par "matière sèche" l'ensemble de l'agrégat (produit carboné, alumine, additifs) et du ciment.

Pour la protection de la partie émergeante 9 de l'anode, les mêmes compositions conviennent, mais il est alors préférable de les appliquer par projection au pistolet. Pour cela, il est nécessaire, en fonction du type de pistolet utilisé, de contrôler la granulométrie de l'agrégat et du ciment (inférieure à 1 mm et, de préférence, inférieure à 0,5 mm), et d'augmenter sensiblement la quantité d'eau.

Cette quantité d'eau sera fixée, par exemple, entre 10 et 40 % en poids par rapport à la matière sèche (telle que définie ci-dessus) pour l'utilisation sous forme de pâte de collerette et, jusqu'à 60 % en poids pour l'utilisation sous forme de pâte fluide à projeter au pistolet.

## DESCRIPTION DE L'INVENTION

Le coke de pétrole, entrant dans la composition de la pâte de collerette selon l'invention, est de préférence de la qualité "courante" utilisée pour la fabrication des anodes.
Sa composition moyenne habituelle est la suivante :

| | | |
|---|---|---|
| Cendres (comptées en oxydes) | 0,4 % | |
| Impuretés (comptées en métal) | | |
| . silicium | 0,056 % | |
| . Fer | 0,045 % | |
| . Manganèse | 0,001 % | 0,124 % |
| . Vanadium | 0,012 % | |
| . Zinc | 0,010 % | |

Le graphite artificiel préparé à partir de ce coke a une teneur en cendres < 0,1 %.

Il est également possible d'utiliser des déchets d'électrodes semi-graphite dont le taux de cendres est inférieur à 5 %.

Ciment d'aluminate de chaux : deux compositions particulièrement favorables sont celles qui correspondent aux produits "SECAR 80" et "SECAR 71" de la Société LAFARGE FONDU INTERNATIONAL et dont la composition apparaît sur le tableau suivant :

| | SECAR 80 | | SECAR 71 | |
|---|---|---|---|---|
| $Al_2O_3$ | 80,5 % | | 71 % | |
| CaO | 18,0 % | 98,5% | 27 % | 98% |
| | | | | |
| $SiO_2$ | 0,20 % | | 0,35 % | |
| $Fe_2O_3$ | 0,15 % | | 0,25 % | |
| $TiO_2$ | 0,03 % | 0,43 % | 0,05 % | 0,72% |
| $K_2O$ | 0,03 % | | 0,05 % | |
| $Cr_2O_3$ | 0,01 % | | 0,01 % | |
| $Mn_2O_3$ | 0,01 % | | 0,01 % | |
| MgO | 0,1 % | | 0,2 % | |
| $Na_2O$ | 0,25 % | | 0,35 % | |
| $SO_3$ | 0,1 % | | 0,15 % | |
| $P_2O_5$ | traces. | | — | |

En outre, l'addition de poudre métallique améliore sensiblement la résistance à l'oxydation, comme on l'a précédemment signalé.

Enfin, on peut effectuer une addition complémentaire de poudre d'alumine, type alumine d'électrolyse ou alumine globulaire représentant jusqu'à 50 % en poids de l'agrégat.

Le mélange charge carbonée + ciment + poudre métallique + poudre d'alumine éventuelles est préparé dans un malaxeur après addition de la quantité d'eau nécessaire qui peut de situer entre 10 et 40 % en poids par rapport au poids total d'agrégat + ciment + additif dans le cas d'une pâte de collerette et jusqu'à 60 % dans le cas d'une pâte fluide à projeter.

La pâte obtenue est coulée dans la collerette 7 puis tassée ou vibrée selon la compacité souhaitée ou encore, projetée au pistolet, selon le cas.

Lors de la mise en place dans la cuve d'une anode dont la partie carbonée supérieure est recouverte d'enduit protecteur et munie de ses collerettes de protection selon l'invention, la montée en température de la partie supérieure de l'anode est suffisamment lente pour que le séchage et la cuisson de la pâte de protection dans les collerettes et du revêtement projeté s'effectuent sans fissures.

4

## EXEMPLES DE MISE EN OEUVRE

On a rassemblé sur le tableau 1 ci-après, les résultats moyens d'une première série de tests effectués à partir de huit formulations de pâtes selon l'invention. Le test d'oxydation consiste à mesurer, sur un échantillon de pâte, la perte de poids en 1 heure à 550°C sous courant d'air.

Il apparaît que cette perte de poids varie de 9 à 25 % selon la formulation, les meilleurs résultats étant obtenus avec les compositions n° 1 et 5, la n° 5 avec 10% de poudre d'alumine, donne le meilleur résultat (taux d'oxydation < 9 %).

On a procédé à un second test, à partir d'une formulation de pâte, pour projection au pistolet, destinée à la protection de la partie émergeant d'une anode précuite.

La pâte fluide avait la composition suivante :

```
coke de pétrole
(poudre tout-venant 0,5 mm)........ 20 %
Poudre d'alumine .................. 45 %
Ciment "SECAR"..................... 35 %


Eau, en % du total des matières sèches
(coke + alumine + ciment)........  64,6 %
```

Les échantillons ont été cuits à 30 mn à 1000°C sous azote

On a procédé sur les échanillons ainsi revêtus, à un test d'oxydation à 1000°C sous courant de gaz carbonique de 50 l./h. pendant 24 h., la perte de poids, exprimée en $mg.cm^{-2}.h^{-1}$, a été de 5,5 %.

Sur des échantillons témoins non revêtus, la perte de poids, dans les mêmes conditions, a été de 8,2 %.

Le gain relatif est donc de 33 %.

| Composition en % en poids | 1 | 2 | 3 | 4 | 5 | 6 | 7 | 8 |
|---|---|---|---|---|---|---|---|---|
| AGREGAT : Coke de pétrole R8 | 45 | | | | | 23.5 | | 26 |
| 8/100 mesh | 45 | 90 | 100 | | | 59 | 50 | 26 |
| Poudre de coke de pétrole | | | | | | | 50 | |
| Graphite 0.5/1.5 | | | | 50 | 45 | | | |
| Poudre de graphite | | | | 50 | 45 | | | |
| Poudre d'alumine | 10 | 10 | | | 10 | 17.5 | | 48 |
| CIMENT (en % de l'agrégat total) | 25 | 25 | 45 | 45 | 25 | 17.6 | 20 | 30 |
| Test d'oxydat.(%) | -9.6 | -19.9 | -21.5 | -9.16 | -8.81 | -15.4 | -24.9 | -12 |
| Eau en % ( des matières sèches) | 12.5 | 6.0 | 20.0 | 29.0 | 25.0 | 26.0 | 32.0 | 20 |

R8 signifie : refus au tamis de 8 mailles au pouce (vide de maille environ 2,4 mm).

8/100 signifie : fraction entre les tamis de 8 et de 100 mailles au pouce.

La mise en oeuvre de l'invention permet d'assurer une protection efficace de la base des rondins d'anodes et la partie émergeante de l'anode contre la corrosion et l'oxydation pendant toute la durée de vie de l'anode. En outre, elle ne gêne en aucune façon la récupération des éléments de l'anode usée : (croûtes de bain d'électrolyse, mégot de carbone, fonte de scellement et rondins de suspension), qui sont recyclés, après traitement convenable.

L'invention peut, bien entendu, être mise en oeuvre indépendamment sur les rondins et/ou sur la partie carbonée émergeante de l'anode. En outre, le revêtement par projection au pistolet pourra également être effectué sur les rondins, en substitution à la pâte de collerette, si l'exploitant le considère comme suffisamment efficace en fonction de ses exigences.

**Revendications**

1. Composition pour pâte de revêtement de protection contre la corrosion et l'oxydation à chaud destinée aux rondins (3) d'anodes précuites et à la partie carbonée émergeante (9) de ces anodes (1) pour les cuves d'électrolyse Hall-Héroult constituée d'un agrégat de produits pulvérulents, d'un liant d'aluminate de calcium et éventuellement d'eau caractérisé en ce que :
   - l'agrégat est formé de produits carbonés choisis parmi le coke, le graphite, le semi-graphite, les déchets d'électrodes éventuellement additionnés de poudre d'alumine dans une proportion pouvant constituer jusqu'à 50% du poids de cet agrégat;
   - le liant est présent dans une proportion comprise entre 15 et 50% du poids de l'agrégat et est un ciment d'aluminate de chaux ayant une teneur en alumine au moins égale à 70% et une teneur totale en impuretés gênantes telles que par exemple $SiO_2$, $Fe_2O_3$, $TiO_2$, $K_2O$, $Cr_2O_3$, $Mn_2O_3$, inférieure à 5%;
   - la quantité d'eau ajoutée à la matière sèche constituée par le mélange agrégat + liant pour former la pâte est inférieure ou égale à 60% du poids de matière sèche.

2. Composition pour pâte de revêtement selon la revendication 1, caractérisée en ce que la teneur en impuretés du ciment d'aluminate de chaux est inférieure à 2%.

3. Composition pour pâte de revêtement selon la revendication 1 ou 2, caractérisé en ce que l'agrégat contient de la poudre d'alumine dans une proportion pouvant constituer jusqu'à 50% du poids de cet agrégat.

4. Composition pour pâte de revêtement selon l'une quelconque des revendications 1 ou 2, caractérisée en ce que les produits carbonés dans l'agrégat ont une teneur en cendres inférieure à 5%.

5. Composition pour pâte de revêtement selon l'une quelconque des revendications 1 à 4, caractérisée en ce que l'agrégat contient un agent antioxydant sous forme de poudre métallique rajoutée dans la proportion de 0,01 à 5% en poids de cet agrégat.

6. Composition pour pâte de revêtement selon la revendication 5, caractérisée en ce que la poudre métallique en addition est de la poudre d'aluminium passivée en grains inférieurs à 0,1mm.

7. Composition pour pâte de revêtement selon l'une quelconque des revendications 1 à 6, caractérisée en ce qu'en vue d'application comme pâte de collerette, la teneur en eau dans ladite pâte est comprise entre 10% et 40% du poids de matière sèche.

8. Composition pour pâte de revêtement selon l'une quelconque des revendications 1 à 6, caractérisée en ce qu'en vue d'application par pulvérisation au pistolet, la teneur en eau dans ladite pâte est comprise entre 10% et 60% du poids de matière sèche.

9. Application d'une pâte obtenue à partir de la composition selon l'une quelconque des revendications 1 à 8 à la protection des rondins d'anodes précuites et de la partie carbonée émergeante de ces anodes.

**Claims**

1. A composition for a paste for a coating for protection from corrosion and oxidation in the hot condition which is intended for the carrier bars (3) of prebaked anodes and for the emergent carbonaceous part (9) of said anodes (1) for Hall-Heroult electrolysis tanks formed by an aggregate of powder products, a calcium aluminate binder and optionally water, characterised in that:
   - the aggregate is formed by carbonaceous products selected from coke, graphite, semi-graphite and electrode scrap optionally with the addition of alumina powder in a proportion which can constitute up to 50% of the weight of said aggregate;

- the binder is present in a proportion of between 15 and 50% of the weight of the aggregate and is a calcium aluminate cement having an alumina content which is at least equal to 70% and a total content of troublesome impurities such as for example $SiO_2$, $Fe_2O_3$, $TiO_2$, $K_2O$, $Cr_2O_3$ and $Mn_2O_3$ of less than 5%; and
- the amount of water added to the dry matter formed by the aggregate + binder mixture to form the paste is lower than or equal to 60% of the weight of dry matter.

2. A composition for a coating paste according to claim 1 characterised in that the proportion of impurities in the calcium aluminate cement is less than 2%.

3. A composition for a coating paste according to claim 1 or claim 2 characterised in that the aggregate contains alumina powder in a proportion which can constitute up to 50% of the weight of said aggregate.

4. A composition for a coating paste according to either one of claims 1 and 2 characterised in that the carbonaceous products in the aggregate have a proportion of ash of less than 5%

5. A composition for a coating paste according to any one of claims 1 to 4 characterised in that the aggregate contains an anti-oxidising agent in the form of a metal powder which is added in a proportion of from 0.01 to 5% by weight of said aggregate.

6. A composition for a coating paste according to claim 5 characterised in that the metal powder added is passivated aluminium powder in the form of grains smaller than 0.1 mm.

7. A composition for a coating paste according to any one of claims 1 to 6 characterised in that for application as a collar portion paste the proportion of water in said paste is between 10% and 40% of the weight of dry matter.

8. A composition for a coating paste according to any one of claims 1 to 6 characterised in that for application by spraying with a gun the proportion of water in said paste is between 10% and 60% of the weight of dry matter.

9. Application of a paste produced from the composition according to any one of claims 1 to 8 for the protection of carrier bars of prebaked anodes and the emergent carbonaceous part of said anodes.

**Patentansprüche**

1. Zusammensetzung für Beschichtungspaste zum Schutz gegen die Heißkorrision und -oxidation, die für die Zapfen (3) vorgebrannter Anoden und für den herausragenden kohlenstoffhaltigen Teil (9) dieser Anoden (1) für die HallHéroult-Elektrolysewannen bestimmt ist und aus einer Masse pulverförmiger Stoffe, einem Calciumaluminatbindemittel und ggf. Wasser zusammengesetzt ist, dadurch gekennzeichnet, daß:
   - die Masse aus kohlenstoffhaltigen Stoffen gebildet ist, die unter dem Koks, dem Graphit, dem Halbgraphit, den Elektrodenabfällen gewählt sind und denen ggf. Aluminiumoxidpulver in einem Anteil zugesetzt ist, der bis zu 50 % des Gewichts dieser Masse darstellen kann;
   - das Bindemittel in einem Anteil von 15 bis 50 % des Gewichts der Masse vorliegt und ein Calciumaluminatzement mit einem Aluminiumoxidgehalt von wenigstens gleich 70 % und einem Gesamtgehalt an störenden Verunreinigungen, wie z.B. $SiO_2$, $Fe_2O_3$, $TiO_2$, $K_2O$, $Cr_2O_3$, $Mn_2O_3$, unter 5 % ist;
   - die der aus dem Gemisch Masse + Bindemittel bestehenden Trockensubstanz zum Bilden der Paste zugesetzte Wassermenge unter oder gleich 60 % des Trockensubstanzgewichts ist.

2. Zusammensetzung für Beschichtungspaste nach dem Anspruch 1, dadurch gekennzeichnet, daß der Gehalt des Calciumaluminatzements an Verunreinigungen unter 2 % ist.

3. Zusammensetzung für Beschichtungspaste nach dem Anspruch 1 oder 2, dadurch gekennzeichnet,

daß die Masse das Aluminiumoxidpulver in einem Anteil enthält, der bis zu 50 % des Gewichts dieser Masse darstellen kann.

4. Zusammensetzung für Beschichtungspaste nach irgendeinem der Ansprüche 1 oder 2,
dadurch gekennzeichnet,
daß die kohlenstoffhaltigen Stoffe in der Masse einen Aschengehalt unter 5 % haben.

5. Zusammensetzung für Beschichtungspaste nach irgendeinem der Ansprüche 1 bis 4,
dadurch gekennzeichnet,
daß die Masse ein Antioxidationsmittel in Form von metallischem Pulver enthält, das im Anteil von 0,01 bis 5 Gew.% dieser Masse zugesetzt ist.

6. Zusammensetzung für Beschichtungspaste nach dem Anspruch 5,
dadurch gekennzeichnet,
daß das metallische Zusatzpulver passiviertes Aluminiumpulver als Körner unter 0,1 mm ist.

7. Zusammensetzung für Beschichtungspaste nach irgendeinem der Ansprüche 1 bis 6,
dadurch gekennzeichnet,
daß zwecks Verwendung als Bundpaste der Wassergehalt in der Paste im Bereich von 10 % bis 40 % des Trockensubstanzgewichts liegt.

8. Zusammensetzung für Beschichtungspaste nach irgendeinem der Ansprüche 1 bis 6,
dadurch gekennzeichnet,
daß zwecks Verwendung durch Zerstäubung mit Spritzpistole der Wassergehalt in der Paste im Bereich von 10 % bis 60 % des Trockensubstanzgewichts liegt.

9. Verwendung einer aus der Zusammensetzung nach irgendeinem der Ansprüche 1 bis 8 erhaltenen Paste zum Schutz der Zapfen vorgebrannter Anoden und des herausragenden kohlenstoffhaltigen Teils dieser Anoden.

**FIG.1**